# EUROPEAN PATENT APPLICATION

(11) **EP 2 907 693 A1**
(43) Date of publication of application: **19.08.2015**
(21) Application number: 14155232.3
(22) Date of filing: 14.02.2014
(51) Int. Cl.: B60N 2/30, B60N 2/36

(54) **Vehicle seat and vehicle**

(71) Applicant: Ford Otomotiv Sanayi Anonim Sirketi, 34885 Sancaktepe/Istanbul (TR)
(72) Inventor: Firlar, Burak, 34730 Göztepe -Kadikoy / Istanbul (TR); Yamaner, Ziya, Üsküdar- Istanbul (TR); Yildirim, Hasan, Golcuk- Kocaeli (TR); Wagstaff, Ian, Gölcük / Kocaeli (TR)
(74) Representative: Illing, Rolf

(57) **Abstract**

The present invention refers to a seat for a vehicle comprising a seatback (2), a seat cushion (3), and a seat support device (4) constructed and arranged to movably support the seatback (2) and the seat cushion (3) on a floor of the vehicle. The seatback (2) is displaceable between an upright position and a horizontal position, wherein the seat cushion (3) is displaceable between an upper horizontal position and a lower horizontal position. The upper horizontal position is more distant from the floor of the vehicle than the lower horizontal position, wherein the seat cushion (3) takes the upper horizontal position when the seatback (2) is in the upright position and the seat cushion (3) takes the lower horizontal position when the seatback (2) is in the horizontal position.

The invention further refers to a vehicle comprising at least one seat of the aforementioned type.

## Description

The present invention refers to a seat for a vehicle comprising a seatback, a seat cushion, and a seat support device movably supporting the seatback and the seat cushion on a floor of the vehicle. Particularly, the present invention refers to a foldable vehicle seat, i. e. a seat wherein the seatback is displaceable between an upright position and a horizontal position. Furthermore, the present invention refers to a vehicle.

Generally, vehicle seats that comprise a seatback which is displaceable between an upright position and a horizontal position are known. In addition to provide a seating function for passengers such seats provide a storage function for cargo as well. The seatback can be folded toward the seat cushion into a substantially horizontal position which is substantially right-angled to the upright position so that the back of the seatback forms a table onto which cargo can be stored for transport. However, as bolster portions of the seatback and the seat cushion come into contact with each other in the folded state of the vehicle seat the seatback might still be greatly inclined relative to the seat cushion so that a proper parallel orientation of the seatback and the seat cushion cannot be achieved, thus limiting the loading capacity of the vehicle.

In order to further increase the loading capacity of the vehicle, seats were designed that facilitate the seat cushion to tumble in front of the vehicle seat. This allows displacing the seatback further down into a more horizontal position as the seatback can use the freed space of the seat cushion in the folded state now, thus increasing the loading capacity of the vehicle in the vertical direction. However, the tumbled seat cushion in front of the vehicle seat may be an obstacle for elongate cargo, such as long tubes, which is to be stored in a horizontal direction in the vehicle's loading space as the tumbled seat cushion protrudes the loading surface in a vertical direction.

Against this background, an object of the present invention is to provide a seat for a vehicle that allows increasing the loading capacity of the vehicle without having the disadvantages found in the related art described above. Furthermore, another object of the present invention is to provide a vehicle having an increased loading capacity.

These objects are achieved by a vehicle seat having the features of claim 1 and by a vehicle having the features of claim 4. Further, particularly advantageous embodiments of the invention are disclosed in the respective dependent claims.

It should be noted that the individual features listed in the description below can be combined in any technically meaningful way with each other and show further embodiments of the invention. The description of the invention is additionally characterized and specified particularly in connection with the figures.

According to the present invention a seat for a vehicle comprises a seatback, a seat cushion, and a seat support device constructed and arranged to movably support the seatback and the seat cushion on a floor of the vehicle. The seatback is displaceable between an upright position and a horizontal position which is substantially right-angled to the upright position, wherein the seat cushion is displaceable between an upper horizontal position and a lower horizontal position. The upper horizontal position is meant to be more distant from the floor of the vehicle than the lower horizontal position. Furthermore, the horizontal position of the seat cushion is meant to be substantially parallel to the horizontal position of the seatback in the folded state. According to the invention the seat cushion takes the upper horizontal position when the seatback is in the upright position and the seat cushion takes the lower horizontal position when the seatback is in the horizontal position. In other words, the vehicle seat according to the present invention facilitates the seat cushion to dive down, for example under the seatback, when the seatback is folded toward the seat cushion. Thus, the seat cushion may remain underneath the folded seatback instead of tumbling in front of it. Consequently, the seat cushion cannot interfere with any cargo stored on the back of the seatback. As the seat cushion is able to dive down under the folded seatback in the horizontal position of the seatback the seatback can take at least some of the space normally occupied by the seat cushion in the upright position of the seatback. Thus, the loading capacity of the vehicle is increased in the vertical direction of the vehicle as well as in its horizontal direction. In particular, elongated load is no longer obstructed by the seat cushion in the folded state of the vehicle seat.

In order to achieve an optimal packing of the entire seat when it is in the folded state, according to an advantageous embodiment of the present invention, the seat cushion is completely arranged underneath the seatback when the seatback is in the horizontal position.

According to yet another advantageous embodiment of the present invention the seat is a front passenger's seat of the vehicle, for example a co-driver's or front passenger's seat. This facilitates the usage of the space underneath a glove box of the vehicle as a further loading space as the seat cushion which according to the present invention dives down underneath the seatback in the folded state cannot block the space underneath the glove box any longer. Consequently, elongate load, such as for example long tubes, can be stored on the back of the folded down seatback even using the space underneath the glove box, thus allowing a longer load to be transported in the vehicle.

According to another aspect of the present invention a vehicle, for example a van-type vehicle, is provided that comprises at least one seat of the type described above. In a particularly preferred embodiment the seat of the vehicle is a front passenger's or co-driver's seat in a first row of seats, wherein the height of a back of the seat's seatback placed in the horizontal position, i. e. the folded state, is the same as a height of a second row's floor level of the vehicle. Thus, an even loading surface including the second row's floor and the back of the folded seatback is created onto which load can be stored for transport without being obstructed by portions of the folded seat protruding the loading surface in a vertical direction of the vehicle. As the vehicle seat is a front passenger's or co-driver's seat the space underneath a glove box generally provided in front of the front passenger's seat can also be used as a loading space as already described above.

Further features and advantages of the present invention will become apparent from the following description of a non-limiting embodiment of the invention which will be explained below with reference to the drawing. In this drawing:
- FIG. 1: shows a perspective view of a vehicle seat according to an embodiment of the present invention in an upright position,
- FIG. 2: shows a rear view of the seat of FIG. 1 in a horizontal position, i. e. a folded state, and
- FIG. 3: shows a side view of the seat of FIG. 1 in a horizontal position, i. e. a folded state.

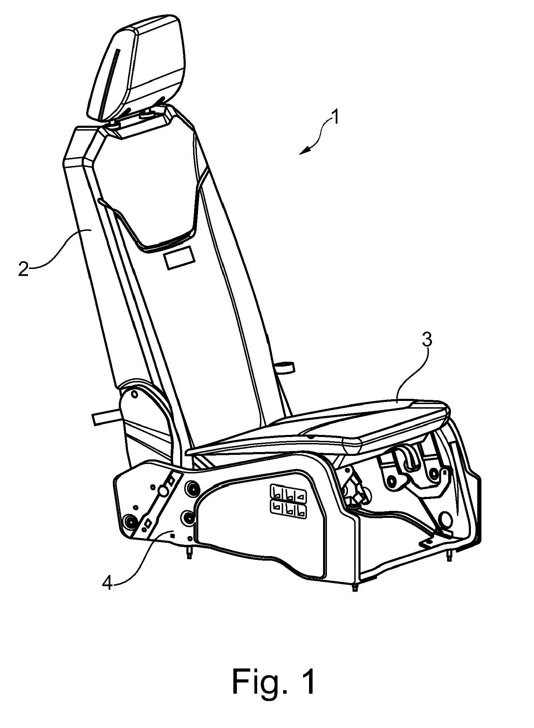

FIG. 1 shows a perspective view of a vehicle seat 1 according to an embodiment of the present invention in an upright position. The seat 1 comprises a seatback 2, a seat cushion 3, and a seat support device 4 constructed and arranged to movably support the seatback 2 and the seat cushion 3 on a floor (not shown) of the vehicle. In FIG. 1 the seatback 2 is shown in an upright position, i. e. a position substantially orthogonal to the seat cushion 3. Generally, in this position the seat 1 provides a seating function for passengers.

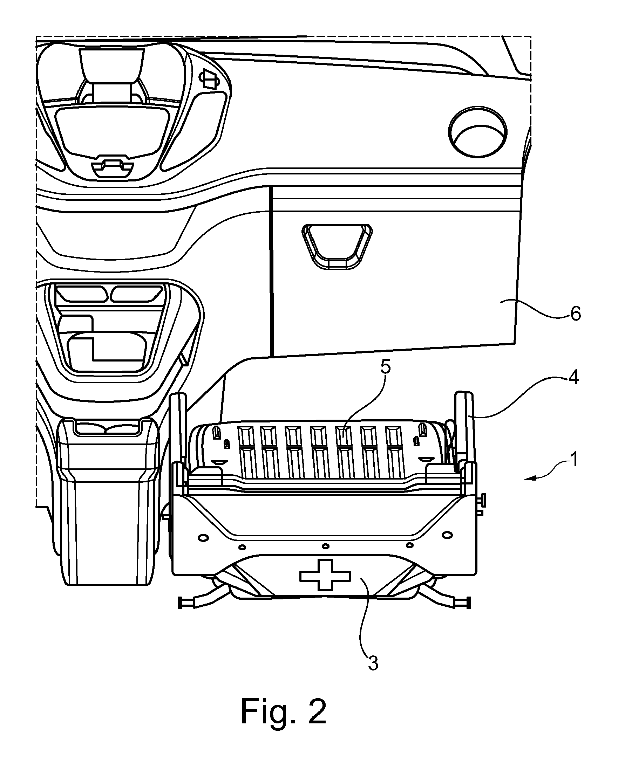

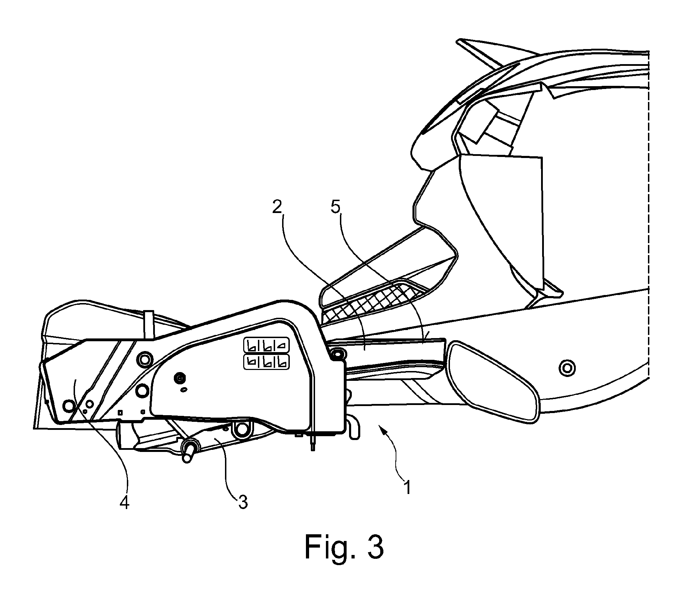

Furthermore, the seat 1 is displaceable between the upright position shown in FIG. 1 and a horizontal position which is shown in a rear view of the seat 1 in FIG. 2 and in a side view of the seat 1 in FIG. 3. In other words, in the state shown in FIGS. 2 and 3 the seatback 2 of the seat 1 is folded toward the seat cushion 3 into a substantially horizontal position which is substantially right-angled to the upright position shown in FIG. 1 so that a back 5 of the seatback 2 forms a table onto which for example cargo can be stored for transport. Thus, in the horizontal position of the seatback 2 (the folded state of the seat 1) shown in FIGS. 2 and 3 the seat 1 provides a storage function for transporting cargo in the vehicle.

As can be seen from FIGS. 1 to 3 the seat cushion 3 of the seat 1 is displaceable between an upper horizontal position (shown in FIG. 1) and a lower horizontal position (shown in FIGS. 2 and 3), wherein the upper horizontal position is more distant from the floor of the vehicle than the lower horizontal position. Furthermore, the seat cushion 3 takes the upper horizontal position when the seatback 2 is in the upright position and the seat cushion 3 takes the lower horizontal position when the seatback 2 is in the horizontal position, i. e. the folded state of the seat 1. As is shown in FIGS. 2 and 3, in the folded state of the seat 1 the seat cushion 3 is arranged completely underneath the seatback 2 so that an optimal and space saving packing is achieved for the seat 1 in the folded state.

Furthermore, from FIG. 2 it can be seen that the seat 1 is a front passenger's seat of the vehicle, in particular a co-driver's seat, as in front of the seat 1 a glove box 6 can be identified. As the seat cushion 3 does not tumble in front of the seatback 2 but instead dives down underneath the seatback 2 in the folded state of the seat 1 it cannot block the space underneath the glove box 6. Thus, the space underneath the glove box 6 of the vehicle can be used as a further loading space. Now, elongate load, such as long tubes, can be stored on the back 5 of the folded down seatback 2 even using the space underneath the glove box 6, thus allowing a longer load to be transported in the vehicle. Preferably, the height of the back 5 of the seat's 1 seatback 2 placed in the horizontal position as shown in FIGS. 2 and 3 is the same as the height of a second row's floor level. Thus, an even loading surface can be created in the vehicle including the second row's floor (not shown) and the back 5 of the seatback 2. Preferably, the vehicle is a van-type vehicle.

The above described vehicle seat and vehicle according to the present invention are not limited to the embodiment disclosed herein, but also encompass other embodiments having the same effect.

In a preferred embodiment the seat according to the present invention is used in a vehicle, particularly as a front passenger's seat in a van-type motor vehicle.

### List of reference numerals:

- 1: Vehicle seat
- 2: Seatback
- 3: Seat cushion
- 4: Support device
- 5: Back of 2
- 6: Glove box

## Claims

1. A seat for a vehicle comprising a seatback (2), a seat cushion (3), and a seat support device (4) constructed and arranged to movably support the seatback (2) and the seat cushion (3) on a floor of the vehicle, the seatback (2) being displaceable between an upright position and a horizontal position, wherein the seat cushion (3) is displaceable between an upper horizontal position and a lower horizontal position, the upper horizontal position being more distant from the floor of the vehicle than the lower horizontal position, wherein the seat cushion (3) takes the upper horizontal position when the seatback (2) is in the upright position and the seat cushion (3) takes the lower horizontal position when the seatback (2) is in the horizontal position.

2. The seat according to claim 1, wherein the seat cushion (3) is completely arranged underneath the seatback (2) when the seatback (2) is in the horizontal position.

3. The seat according to claim 1 or 2, wherein the seat is a front passenger's seat of the vehicle.

4. A vehicle comprising at least one seat (1) according to any one of the preceding claims.

5. The vehicle according to claim 4, wherein the seat (1) is a front passenger's seat in a first row of seats and a height of a back of the seat's (1) seatback (2) placed in the horizontal position is the same as a height of a second row's floor level.

6. The vehicle according to claims 4 or 5, wherein the vehicle is a van-type motor vehicle.
